Europäisches Patentamt

European Patent Office

Office européen des brevets

(11) Publication number: **0 389 261**
**A2**

(12) # EUROPEAN PATENT APPLICATION

(21) Application number: **90303038.5**

(22) Date of filing: **21.03.90**

(51) Int. Cl.5: **G11B 31/00**

(30) Priority: **22.03.89 JP 70256/89**
**12.10.89 JP 265679/89**

(43) Date of publication of application:
**26.09.90 Bulletin 90/39**

(84) Designated Contracting States:
**DE GB NL**

(71) Applicant: **SEIKO EPSON CORPORATION**
**4-1, Nishishinjuku 2-chome**
**Shinjuku-ku Tokyo(JP)**

(72) Inventor: **Kono, Mitsuru**
**c/o Seiko Epson Corporation, 3-5 Owa**
**3-chome**
**Suwa-shi, Nagano-ken(JP)**

(74) Representative: **Caro, William Egerton et al**
**J. MILLER & CO. Lincoln House 296-302 High**
**Holborn**
**London WC1V 7JH(GB)**

(54) **Compact-type device for reproducing data.**

(57) A compact-type device for reproducing data comprising means (1) for receiving optical recording media on which data is recorded, means (10) for reading the data from the optical recording media, and means (2, 6, 7, 8) for reproducing the data for output, characterised in that the reproducing means comprise a display (2) and an audio output (6, 7, 8) for reproducing data as music, sounds or audio signals, and in that control means (49) are provided for synchronising the display and the audio output.

FIG. 13

## COMPACT-TYPE DEVICE FOR REPRODUCING DATA

The present invention relates to a compact and portable type of device for reproducing data.

Compact and portable personal data reproducing devices, such as an electronic pocket book, an electronic dictionary and an electronic translator, etc., are known.

However, such compact and portable personal data reproducing devices contain only character and diagram display data or data for sound to be generated by an IC, which sound has poor quality, or sound signals recorded on a tape, which has a long random access time. In a written book, in which communications for use on an overseas trip or somewhere else are collected, we can only read the written sentences but not hear them pronounced. An IC or IC card may be used for spoken communication but the disadvantage of this is that the memory capacity is limited and the sound quality is bad. A tape may also be used but random accessing of the data takes a long time.

An optical memory, such as a CD-ROM, has a substantial capacity and can be used as an external memory for a personal computer, but it is inconvenient to use such a memory separately from the personal computer and it costs a lot of money. Moreover, it is difficult to input data to such a memory by operating the keys of a keyboard.

It is an object of the present invention to provide a compact type device for reproducing data, which can instantly retrieve a substantial amount of data from small optical media by accessing such media at random and which can synchronise two different kinds of output for the data.

According to the present invention, there is provided a compact type device for reproducing data comprising means for receiving optical recording media on which data is recorded, means for reading the data from the optical recording media, and means for reproducing the data for output, characterised in that the reproducing means comprise a display and an audio output for reproducing data as music, sounds or audio signals, and in that control means are provided for synchronising the display and the audio output.

According to a further aspect of the present invention, there is provided a compact type device for reproducing data, comprising means for reading out from optical media data relating to characters, diagrams, animation, music and sound, means for retrieving such data at random, and display and other reproducing means for providing a synchronised display and reproduction of the data retrieved.

Conveniently, the data display and the data reproducing means are arranged in one body so that it is possible to miniaturise the overall device.

The use of the optical media makes it possible to store a substantial quantity of data for the display of characters, diagrams and animation and the audible reproduction of sound and music.

The present invention will be described further, by way of example, with reference to the accompanying drawings, in which:-

Figure 1. is a perspective view of one embodiment of display device according to the present invention;

Figure 2 is a cross sectional view showing the interior of the display device of Figure 1;

Figure 3 is a cross sectional view showing a modification of the arrangement shown in Figure 2;

Figures 4 to 7 show applications of the display device according to the present invention;

Figures 8 to 12 are perspective views showing, respectively, further embodiments of the display device according to the present invention; and

Figure 13 is a circuit diagram of the circuitry in the display device according to the present invention.

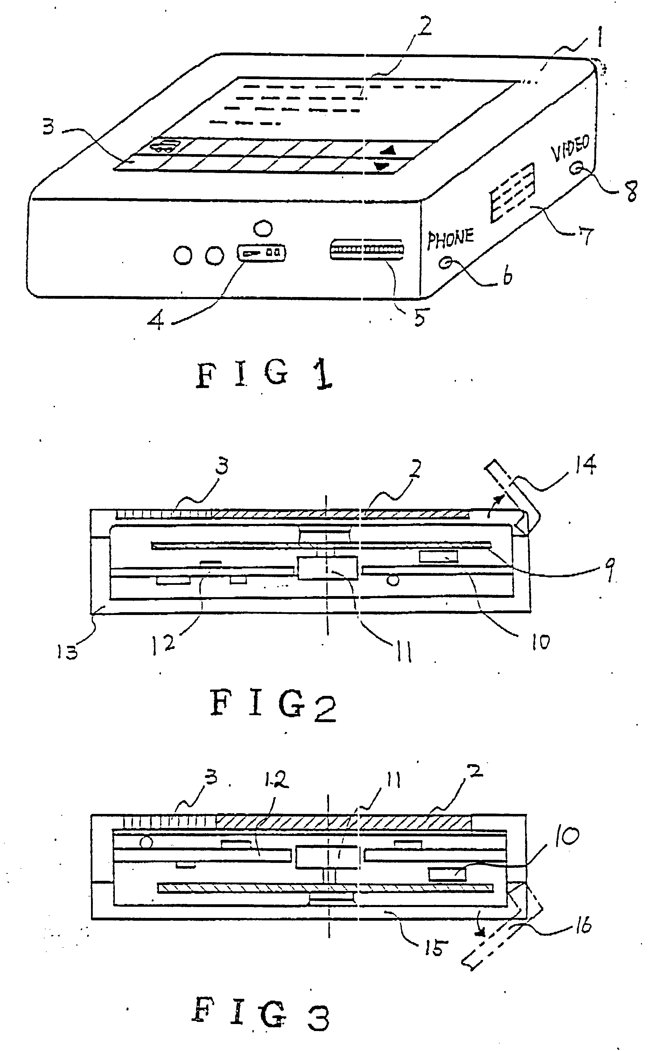

Referring initially to Figures 1 to 3, a compact type data display and reproduction device has a body 1. On the surface of the body 1, there is a display portion 2, and an operating portion or board 3 for operating the display portion. On the side of the body 1, there is an operating button 4, which accesses drives for optical media (CD, CD-ROM, optical memory and the like), a volume controller 5 for controlling sound output, an output terminal 6 for a head-phone, a speaker 7 and an output terminal 8 for connection to a CRT. In the interior, as shown in the cross sectional view of Figure 2, there is provided optical media in the form of a disk 9, which is easily changeable by opening a cap on which the display portion 2 and the operating portion 3 are arranged. In this instance, the body 1 has a case 13, and the numeral 14 designates the condition when the cap is opened. In a modification shown in Figure 3, a cap for ejecting the disk is arranged on the opposite side from the display portion 2 and the operating portion 3 in order to protect the display portion from being stressed when the cap is pressed down. In this instance, the body has a case 15, and the numeral 16 designates the condition when the cap is opened. In both versions, the case contains a spindle motor 11, an optical pick-up device or head 10, and a control circuit 12.

It is possible for the size of the disk to be 8 cm, the size of a single CD, which allows the device to be small enough to carry in one hand. It is also feasible to use a larger size, e.g. 12 cm in order to make the display portion 2 as large as possible and allow the display to hold not only characters but also maps and the like. The operating portion 3 may, for example, be a touch panel. A card, whose symbol marks can be changed, may be placed on or around the panel so that a function may be chosen by first selecting a symbol mark to display a menu, and then selecting one item from the menu to provide the intended function.

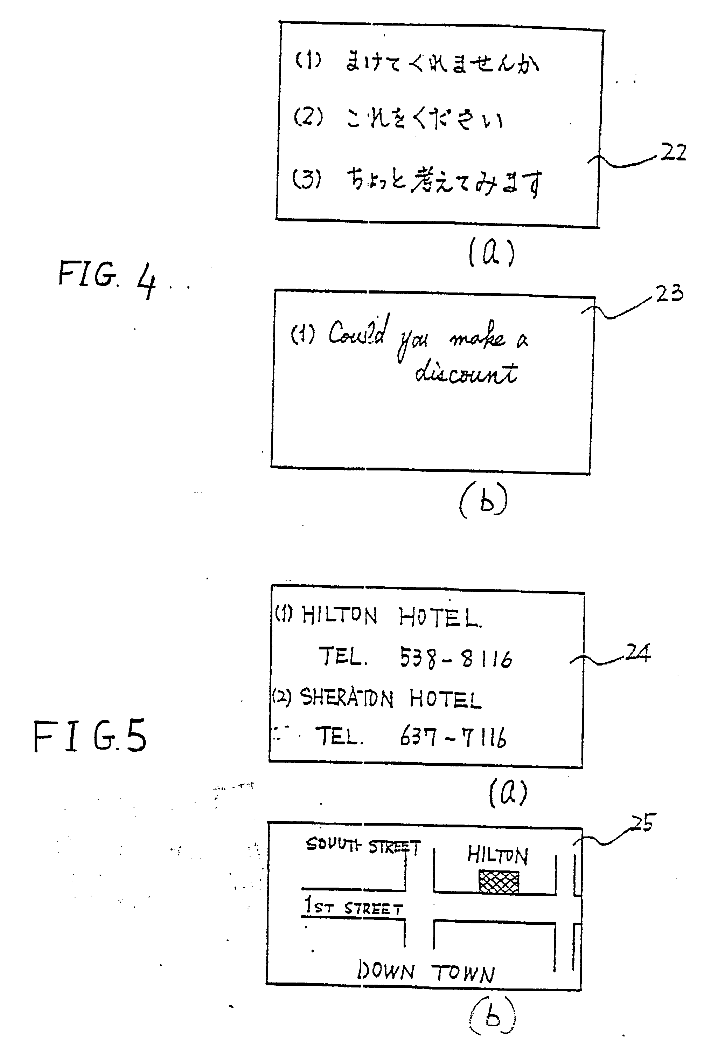

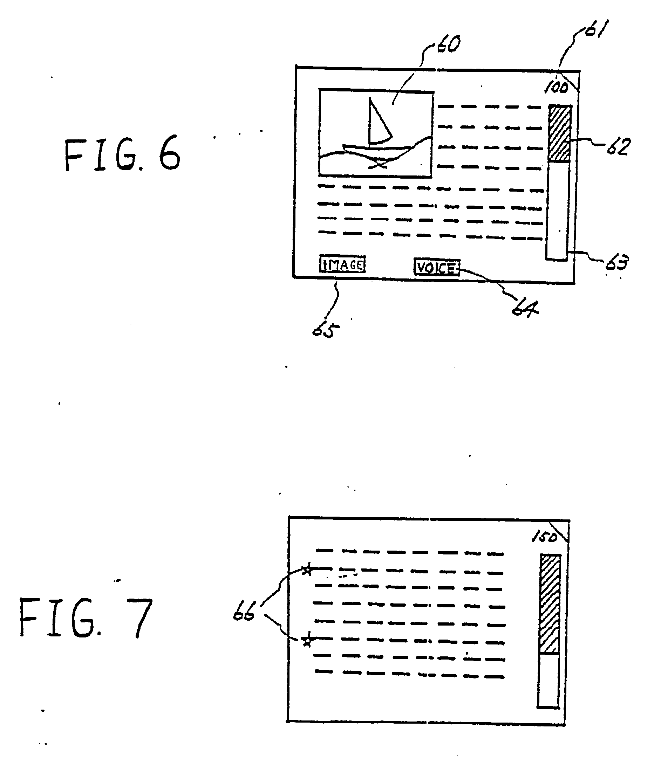

Figure 4 shows an application of the display device as a translation book including communications to be used in an overseas trip. Referring to Figure 4 (a), one Japanese sentence (1) is chosen by selection from a display 22 showing the sentences (1), (2) and (3). The chosen sentence (1) is then translated into English as shown on the display 23 in Figure 4 (b) and, at the same time, this English sentence is pronouced in good quality sound through the speaker 7. Figure 5 shows an alternative application of the display device as a travel guide. After selecting the hotel (1) from two hotels shown in a display 24, the location of this hotel is indicated in a map in a display 25 and is explained audibly through the speaker 7. The optical media is of great use being able to record a substantial amount of data whereby the device can display characters and diagrams while reproducing sound and music at the same time. By contrast, conventional devices provide only one of a display and sound.

Another application of the display device as a portable electronic book is shown in Figure 6. Figure 6 shows an example featuring one page of such a book. The page display 61 includes a picture display 60 in the form of a still image. This can be animated by selecting the icon 65 to change the display 60 from the still image to animation. A further display 63 represents the full number of pages in the book by which the relationship between the present page and the full number of pages can be imagined, together with the thickness of the book. The hatched portion 62 of the display 63 shows the pages which have been read. It is possible to accelerate the turning of the pages, and to turn several pages at once. It is also possible to obtain sound for the display by selecting the voice changing icon 64.

A further example of electronic book shown in Figure 7 has the facility for writing in data using a magneto-optical memory. It is possible to indicate an important passage by adding restriction marks 66, and then to retrieve and to display this marked passage later. In this example, it is possible to print out important passages by connecting the device to a printer. This embodiment also includes a facility for selectively enlarging displayed characters, which enables old people to read the characters easily.

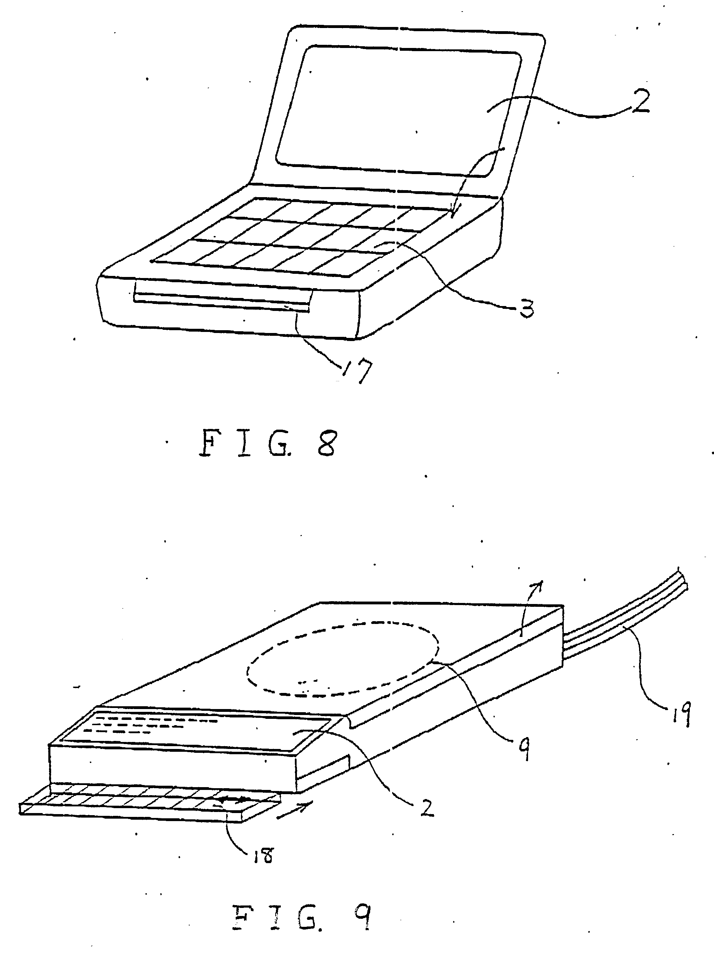

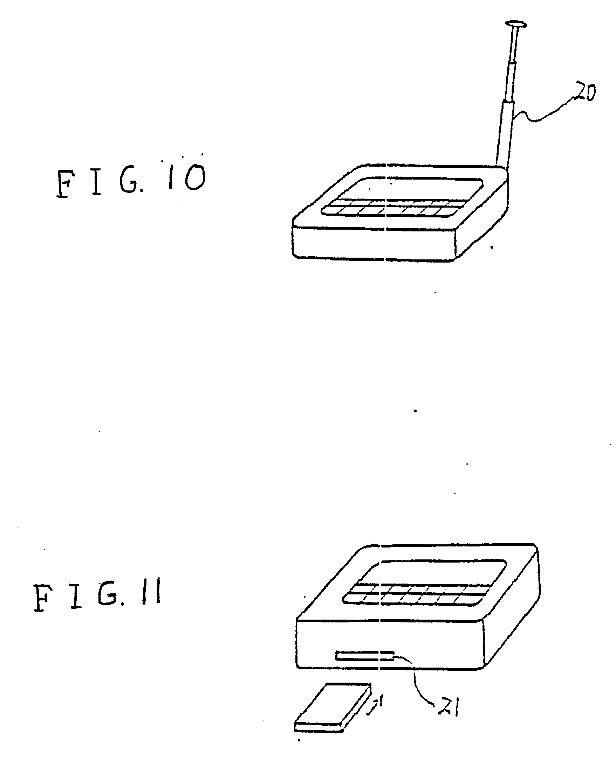

Figures 8 to 13 show alternative external forms for the display device. In Figure 8, the display portion 2 is attached to the cap and an insertion portion 17 for optical media is arranged under the operating portion 3. In Figure 9, the display portion 2 is arranged separately from the cap for insertion of the optical media. In this embodiment, it is possible to pull an operating board 18 out from the body on demand. It is also possible to print out the display data by connecting a cable 19 with the printer. Alternatively, it is possible to use the device as an external memory for other office automation machines (personal computer, word processor and the like) by connecting the cable 19 with such machines. Figure 10 shows an embodiment in which data is selected in response to a signal received through a receiving portion in the form of an aerial 20 for providing a display of the data and for reproducing the data audibly. For example, in a zoo, on approaching the cage of an animal, the device can provide information on the animal by displaying data concerning this animal and emitting sound in response to a signal received through the aerial 20. Figure 11 shows an embodiment which enables both reading and writing of data by the use of optical media, such as a CD-ROM, in combination with a writable IC memory card inserted in a slot 21.

It is also possible to write new data in the optical media from an external data base with the aid of a modem and the like using a magneto-optical or once only writing means.

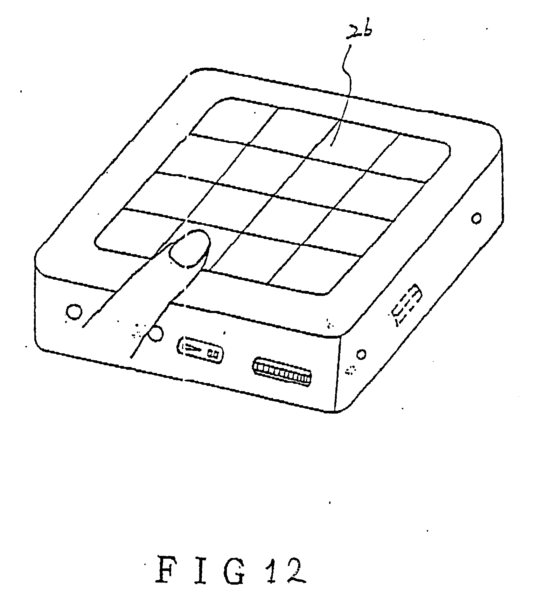

Liquid crystal is employed generally for the display portion 2, since it places low demands for displaying data. Any liquid crystal display can be used, for example, a black and white display, a multi-coloured display or a full coloured display. Further, as shown in Figure 12, input operations can be made easy by forming the display portion with touch keys 26.

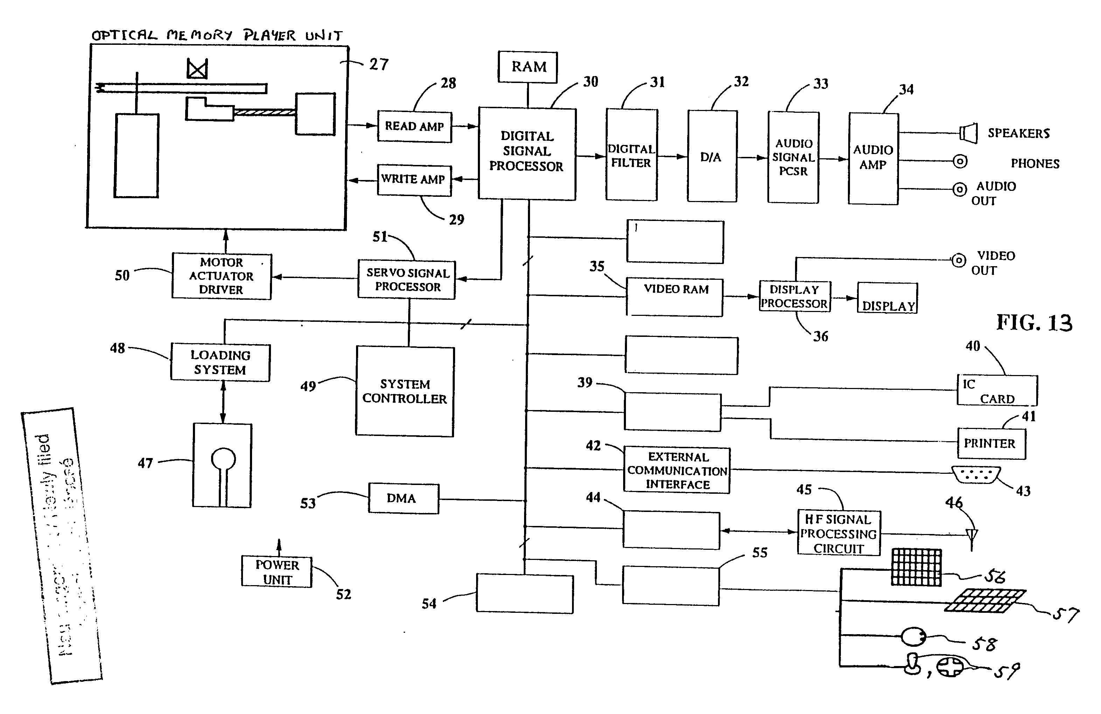

Figure 13 is a circuit diagram of the circuitry employed in each of the above described embodiments. An optical memory player unit 27 can read out and write data on the optical disk 9 using READ/WRITE amplifiers 28 and 29. Only the READ amplifier need be provided in the application having a CD-ROM.

A digital signal processing system 30 outputs signals representing sound or music. These sound or music signals pass through a digital filter 31, a D/A converter 32, an audio signal processing circuit 33 and an audio amplifier 34 for output from the speakers, head-phones or other audio device.

Character and diagram data are displayed on a display portion 37 (the display portion 2) by means of a video RAM 35 and a display processor 36. Further, animation data and the like, which are compressed and written in the optical media, are enlarged and displayed on the display portion 37. The data may also be displayed on other displays, such as a TV and the like, by connecting these other displays to a VIDEO OUT terminal 38 (the output terminal 8).

An external interface 39 is provided to expand the function of the device to allow writing from a memory or using an IC card 40 as a program or data. It is also possible to print out the contents of the display by way of the interface 39 and a printer 41. Data may also be written to or transmitted from an external data bank through a modem and the like using an external communication interface 42 and a connector 43. In the example of Figure 10, wherein data is retrieved and displayed on receipt of a signal from an aerial (the aerial 46 in Figure 13), it is possible to display a location on a map on receiving a signal representing the location by way of the aerial 46, a high frequency signal processing circuit 45 and a modulation circuit 44. It is also possible to transmit data through the modulation circuit 44, the high frequency signal processing circuit 45 and the aerial 46.

A loading unit 47 is provided for removably receiving the optical disk 9 and is connected to a loading system 48. The circuitry further includes a system controller 49, a servo signal processing circuit 51 and a drive circuit 50 for the motor 11 for turning the disk 9 and for the actuator for moving the head 10. A power unit 52 may be a dry battery, a charging battery, a car battery or an AC adapter. A DMA 53 and an external bus interface 54 are also provided.

An input operation is effected through an input circuit 55 using a touch panel 56 (the portion of Figure 12 having tough keys 26), a keyboard 57 (the operating portion 3), a mouse 58 or a joystick 59.

The circuitry shown in Figure 13 operates as follows:

Firstly, the system controller 49 detects the insertion of an optical disk into the disk loading unit 47.

In order to retrieve data written on the optical disk, the system controller 49 controls the servo signal processing circuit 51 and the drive circuit 50 through the digital signal processing system 30 to move the head 10 to read data from the disk. Signals reproduced from the optical memory player unit 27 are amplified by the READ amplifier 28 and are decoded in the digital signal processing system 30, which devides the data reproduced into audio data and visual data for synchronising the display and the audio output.

The signals representing sound or music output from the digital signal processing system 30 pass through the digital filter 31, the D/A converter 32, the audio signal processing circuit 33 and the audio amplifier 34 for output from the speakers, head-phones or other audio device. Picture image data output from the digital signal processing system 30 is transmitted to the video RAM 35 and display processor 36 for displaying on the display portion 37. All data can be output through the external interfaces 39, 40, 41, 46 and 54.

On the other hand, data input through the external interface 39, external communication interface 42, modulation circuit 44 and external bus interface 54 is input into the system memory via the DMA 53. Then, the system controller 49 controls the digital signal processing system 30 for reproducing data from the system memory. Audio data is interleaved with visual data and the data is encoded in the digital signal processing system 30, and is amplified by the WRITE amplifier 29 for recording in the optical memory player unit 27.

The system controller 49, comprising a CPU, controls the whole system (e.g. read/write controlling etc).

As mentioned above, the present compact type data display and reproducing device has various applications. The circuit diagram of Figure 13 incorporates all the various functions needed for such applications. It is, of course, also possible to provide a special device having limited functions. Further, in the present invention, the various applications may be realised by changing the software written in the optical media. If the optical media is a writable optical disk, which is fixed and cannot be replaced, it is also possible to make the entire device very thin, to reduce the cost and to improve the ability to withstand shock and vibration caused by writing data from the outside.

The present invention thus provides a compact and easily operable device wherein various memorised data relating to characters, diagrams, animation, sound and music may be retrieved at random and synchronised for display and other reproduction. Moreover, the device can be adapted to suit various demands by use of the software of the optical media.

## Claims

1. A compact-type device for reproducing data comprising means (1) for receiving optical recording media on which data is recorded, means (10) for reading the data from the optical recording media, and means (2, 6, 7, 8) for reproducing the data for output, characterised in that the reproducing means comprise a display (2) and an audio output (6, 7, 8) for reproducing data as music, sounds or audio signals, and in that control means (30, 49) are provided for synchronising the display and the audio output.

2. A compact type device for data display and data reproducing characterised by recording and reading out means for recording data representing characters, diagrams, animation, music, sound and the like on the medium of an optical memory and for reading out such data, reading out means for only reading out such data, reproducing means for reproducing such data, display means for displaying such data, said recording and reading out means, said reading out means, said reproducing means and said display means being arranged in one body, and retrieving means for accessing the data at random and synchronising at least two kinds of said data for display and reproduction by said reproducing means and said display means.

FIG 1

FIG 2

FIG 3

FIG. 4

(1) まけてくれませんか

(2) これをください

(3) ちょっと考えてみます

22

(a)

23

(1) Could you make a
discount

(b)

FIG. 5

(1) HILTON HOTEL.
TEL. 538-8116

(2) SHERATON HOTEL
TEL. 637-7116

24

(a)

25

SOUTH STREET    HILTON

1ST STREET

DOWN TOWN

(b)

FIG. 6

FIG. 7

FIG. 8

FIG. 9

FIG. 10

FIG. 11

F I G 12

OPTICAL MEMORY PLAYER UNIT

FIG. 13

EP 0 389 261 A2